# EUROPÄISCHE PATENTSCHRIFT

(11) **EP 1 499 511 B1**
(45) Veröffentlichungstag und Bekanntmachung des Hinweises auf die Patenterteilung: **15.11.2006**
(21) Anmeldenummer: 03743288.7
(22) Anmeldetag: 20.02.2003
(51) Int. Cl.: B60H 1/00

(54) **KLIMAANLAGE**
AIR CONDITIONER
INSTALLATION DE CLIMATISATION

(30) Priorität: 04.03.2002 DE 10209412
(43) Veröffentlichungstag der Anmeldung: 26.01.2005
(73) Patentinhaber: LuK Fahrzeug-Hydraulik GmbH & Co. KG, 61352 Bad Homburg v.d.H. (DE)
(72) Erfinder: DI VITO, Thomas, 61273 Wehrheim (DE); Dr. WEBER, Georg, 63329 Engelsbach (DE); SCHÄFER, Tilo, 55566 Daubach (DE)
(86) Internationale Anmeldenummer: PCT/DE2003/000530
(87) Internationale Veröffentlichungsnummer: WO 2003/074305

(56) Entgegenhaltungen:
- EP-A2- 0 842 798
- JP-A- 63 103 727
- US-A- 5 531 264
- US-A1- 2001 003 311
- US-A1- 2001 052 238

## Beschreibung

Die Erfindung betrifft eine Klimaanlage, insbesondere für Kraftfahrzeuge, mit einem Kompressor, wobei derartige Klimaanlagen hauptsächlich zur Kühlung eines Fahrgastraumes herangezogen werden.

Derartige Klimaanlagen sind bekannt. Sie verfügen über einen Kältekreislauf, in dem durch einen Kompressor verdichtetes Kältemittel über einen Gaskühler abgekühlt wird, danach über ein Expansionsventil auf Niederdruck entspannt wird und dabei stark abkühlt. Dieses stark abgekühlte Kältemittel kann mittels eines Wärmetauschers die Zuluft zum Fahrgastraum kühlen. Danach wird über einen Sammler, der in der Lage ist, flüssiges Kältemittel zu speichern, das gasförmige Kältemittel vom Kompressor angesaugt. Bei diesen Klimaanlagen versorgt also ein Kompressor einen Kältekreislauf. Problematisch dabei ist, dass in der Zuluft zum Fahrgastraum befindliche Luftfeuchtigkeit beim Abkühlen kondensiert und bei Benutzung dieses Wärmetauschers zum Heizen verdampft und sich als Beschlag auf den Scheiben niederschlagen kann.

Es sind auch kühlende Klimaanlage bekannt mit einer elektrischen Nachheizung oder mit einer Nachheizung durch Motorkühlwasser. Die letzteren Klimaanlagen haben massive Probleme mit beschlagenen Scheiben beim Umschalten von Kühlen auf Wärmen und bei der Inbetriebnahme eines Fahrzeuges mit kaltem Motor. Die Klimaanlagen mit elektrischer Nachheizung benötigen sehr viel elektrische Energie gegenüber den hier vorgeschlagenen erfinderischen Lösungen.
Die US 2001/0003311 A1 betrifft eine Klimaanlage zur Erwärmung und/oder Kühlung eines Fahrgastraumes eines Kraftfahrzeugs mit einem Kompressor (4), wobei der eine Kompressor, zwei Klimakreisläufe (24, 25, 26; 8, 9, 10, 11, 12) versorgen kann.

JP-63 103 727 zeigt eine Klimaanlage gemäß dem Oberbegriff des Anspruchs 1.

Die der Erfindung zugrunde liegende Aufgabe besteht darin, eine bessere Regelung des Wärmekreislaufes unabhängig vom eigentlichen Motor-Kühlwasser-Kreislauf sowie Einsparung von Kraftstoff und einen besseren Wirkungsgrad der Klimaanlage zu erreichen.

Die Aufgabe wird gelöst durch eine Klimaanlage zur Erwärmung und/oder Kühlung eines Fahrgastraumes eines Fahrzeugs mit Verbrennungsmotor, mit einem Kühlwasserkreislauf, mit einem Kompressor, der gleichzeitig, d. h. im Parallelbetrieb, wenigstens zwei Klimakreisläufe versorgen kann, wobei ein erster Kreislauf zur Kühlung und gleichzeitig ein zweiter Kreislauf zur Erwärmung der Zuluft eines Fahrgastraumes eingesetzt werden kann, wobei im zweiten Kreislauf mit der hohen Temperatur des Hochdruckgases mittels eines ersten Wärmetauschers ein Kühlwasserkreislauf erwärmt wird, wobei der Kühlwasserkreislauf einen Bypass zum eigentlichen Kühlwasserkreislauf des Verbrennungsmotors enthält, welcher geöffnet und geschlossen werden kann, um einen kleinen bzw. großen Kühlwasserkreislauf zu bilden. Vorzugsweise ist auf der Hochdruckseite stromab hinter dem Kompressor ein Abzweigungspunkt angeordnet ist, welcher den Hochdruckkältemittelstrom in zwei Ströme aufteilen kann.
Vorzugsweise ist hinter dem Abzweigungspunkt im zweiten Kreislauf ein Expansionsventil angeordnet. Auch kann hinter dem Abzweigungspunkt im ersten Kreislauf ein Rückschlagventil angeordnet sein.
Insbesondere wird auch eine Klimaanlage bevorzugt, bei welcher auf der Hochdruckseite stromab hinter dem Kompressor im Kreislauf eine Ventileinrichtung angeordnet ist, welche den Hochdruckkältemittelstrom in zwei Ströme aufteilen kann.

Eine erfindungsgemäße Klimaanlage zeichnet sich dadurch aus, dass ein erster Kältemittelstrom zur Kühlung und gleichzeitig ein zweiter Kältemittelstrom zur Erwärmung der Zuluft eines Fahrgastraumes verwendet werden kann. Das hat den Vorteil, dass zunächst die gekühlte Zuluft von der Feuchtigkeit durch einen Wasserabscheider befreit wird und danach diese Zuluft durch den zweiten Kreislauf erwärmt wird, was ein Beschlagen der Scheiben vorteilhaft verhindert.

Bevorzugt wird auch eine Klimaanlage, bei welcher der zur Erwärmung abgezweigte zweite Kältemittelstromkreislauf die bei der Verdichtung entstehende hohe Temperatur des Kältemittels auf der Hochdruckseite zur Erwärmung der Zuluft des Fahrgastraumes verwendet, während der erste Kältemittelstrom dem Kühlkreislauf zur Verfügung steht. Erfindungsgemäß wird bei der Klimaanlage mit der hohen Temperatur des Hochdruckgases mittels Wärmetauscher ein Kühlwasserkreislauf erwärmt. Auch wird eine Klimaanlage bevorzugt, bei welcher ein Kühlwasserkreislauf mittels Wärmetauscher die Zuluft des Fahrgastraumes erwärmt. Weiterhin wird eine Klimaanlage bevorzugt, bei welcher stromab hinter dem Wärmetauscher eine Drosseleinrichtung oder ein Expansionsventil angeordnet ist. Auch wird eine Klimaanlage bevorzugt, bei welcher stromab hinter der Drosseleinrichtung hinter dem Expansionsventil ein Rückschlagventil angeordnet ist, das einen Kältemittelstrom aus dem Kühlkreislauf in den Erwärmungskreislauf verhindert. Eine erfindungsgemäße Klimaanlage zeichnet sich dadurch aus, dass stromab hinter dem Rückschlagventil der Erwärmungskreislauf in den Kühlkreislauf auf der Niederdruckseite, d. h. auf der Ansaugseite des Kompressors einmündet.

Bevorzugt wird ebenfalls eine Klimaanlage, bei welcher mit der hohen Temperatur des Hochdruckgases mittels Wärmetauscher die Zuluft des Fahrgastraumes erwärmt wird.

Weiterhin wird eine Klimaanlage bevorzugt, bei welcher stromab hinter dem Wärmetauscher eine Drosseleinrichtung oder ein Expansionsventil angeordnet ist. Auch wird eine Klimaanlage bevorzugt, bei welcher stromab hinter der Drosseleinrichtung oder dem Expansionsventil ein Wärmetauscher angeordnet ist, der das Kühlmittel mittels Kühlwasser wieder erwärmt. Eine erfindungsgemäße Klimaanlage zeichnet sich dadurch aus, dass stromab hinter dem Wärmetauscher ein Rückschlagventil angeordnet ist, das einen Kältemittelstrom aus dem Kühlkreislauf in den Erwärmungskreislauf verhindert. Auch wird eine Klimaanlage bevorzugt, bei welcher stromab hinter dem Rückschlagventil der Erwärmungskreislauf in den Kühlkreislauf auf der Niederdruckseite, d.h. auf der Ansaugseite des Kompressors, einmündet.

Eine erfindungsgemäße Klimaanlage zeichnet sich dadurch aus, dass durch den zusätzlichen Erwärmungskreislauf beschlagene Scheiben vermieden werden.

Bei einer erfindungsgemäßen Klimaanlage, wird der Kühlwasserkreislauf durch einen kleinen zusätzlichen Bypass im Wasserkreislauf des eigentlichen Kühlwasserkreislaufs des Verbrennungsmotors dargestellt ist, welcher geöffnet und geschlossen werden kann. Auch wird eine Klimaanlage bevorzugt, bei welcher der Wärmetauscher statt Wärme aus dem Kühlwasser Wärme aus der Umgebungsluft oder Wärme aus den Motorteilen oder Motorblockteilen oder Wärme aus dem Abgasstrang heranziehen kann. Eine weitere bevorzugte Ausführungsform einer erfindungsgemäßen Klimaanlage zeichnet sich dadurch aus, dass der Volumenstrom des Motorkühlwassers zur Beeinflussung des Wärmestroms mit einem thermostatischen Regelventil regelbar ist.

Auch wird eine Klimaanlage bevorzugt, bei welcher bei Einschalten der Klimaanlage die Triebraumzufuhr in einem Kompressor mit variablem Hub weitgehend geschlossen wird, um flüssiges Kältemittel möglichst schnell aus dem Kompressor zu bekommen. Ebenfalls wird eine Klimaanlage bevorzugt, bei welcher bei Einschalten der kalten Klimaanlage der kleine Kühlwasserkreislauf wenigstens so lange vom kälteren Motorkühlwasserkreislauf abgekoppelt wird, bis auf der Hochdruckseite des Kompressors kaum noch flüssiges Kältemittel auftritt.

Ein weitere bevorzugte Ausführungsform einer erfindungsgemäßen Klimaanlage zeichnet sich dadurch aus, dass der kleine Kühlwasserkreislauf zum Motorkühlwasserkreislauf geöffnet ist, wenn die Temperatur des kleinen Kühlwasserkreislaufs nach Abgabe der Wärme an die Zuluft des Fahrgastraumes geringer ist als die Temperatur des Motorkühlwassers. Ebenfalls wird eine Klimaanlage bevorzugt, bei welcher der zum Heizen abgezweigte Hochdruckgasstrom entsprechend reduziert wird, wenn weniger Wärme zum Heizen des Fahrgastraumes benötigt wird. Das führt zu einer vorteilhaften Kraftstoffeinsparung. Ebenso wird eine Klimaanlage bevorzugt, bei welcher die Umwälzung des kleinen Kreislaufs abgeschaltet wird, wenn der Fahrgastraum bei warmem Motorkühlwasser mehr gekühlt werden soll, damit keine zusätzliche Wärme in die Anlage eingetragen wird. Auch durch diese Maßnahme wird Kraftstoff eingespart.

Eine weitere bevorzugte Ausführungsform einer erfindungsgemäßen Klimaanlage zeichnet sich dadurch aus, dass bei Einschalten der Klimaanlage die Triebraumzufuhr in einem Kompressor mit variablem Hub weitgehend geschlossen wird, um flüssiges Kältemittel möglichst schnell aus dem Kompressor zu bekommen, und dass dabei der kleine Kühlwasserkreislauf zum Motorkühlwasserkreislauf geöffnet wird, wenn das Motorkühlwasser beim Start des kalten Motors aufgeheizt werden und dabei auf eine möglichst schnelle Heizung des Fahrgastraumes verzichtet werden soll.

Auch wird eine Klimaanlage bevorzugt, bei welcher die Wärmezufuhr nach der Drosselung im Heizzweig möglichst weit reduziert wird, wenn der Fahrgastraum bei warmem Motorkühlwasser gekühlt werden soll. Auch diese Maßnahme hilft, Kraftstoff einzusparen. Auch wird eine Klimaanlage bevorzugt, bei welcher die Abwärme des Heizgases zur Erwärmung benutzt wird. Ebenfalls wird eine Klimaanlage bevorzugt, bei welcher als Kältemittel Gase benutzt werden, welche auf der Hochdruckseite während des Kreislaufes im Betrieb hohe Temperaturen, insbesondere 120°C, erreichen. Besonders wird eine Klimaanlage bevorzugt, bei welcher als Kältemitte CO₂ benutzt wird.

Mittels des Einsatzes einer Wärmepumpe kann gegenüber dem Stand der Technik beim Heizen Kraftstoff gespart werden, und es kann auch bei kaltem Motor deutlich schneller Wärme an die Zuluft des Fahrgastraumes abgegeben werden. Die erfinderische Lösung der Aufgabe besteht sowohl in der Ausführung des Systems als auch in den situationsbezogenen Regelstrategien. Als Vorteile der Erfindung ergeben sich die Vermeidung von beschlagenen Scheiben, Energieeinsparung und Synergieeffekte durch Ersatz anderer Systemkomponenten.

Die Erfindung wird nun anhand der Figuren beschrieben.
Figur 1 zeigt einen Klimakreislauf mit einem zusätzlichen Kreislauf mit Dreiecksprozeß.
Figur 2 zeigt einen Klimakreislauf mit einem zusätzlichen Kreislauf mit Wärmepumpenprozeß.
Figur 3 zeigt eine Variante des Klimakreislaufs von Figur 1.

Ein Kompressor 1 ist auf seiner Hochdruckseite 3, d.h. auf der Seite, auf der das Kältemittel durch die Kompression sehr heiß geworden ist, mit einem Ventil 5 verbunden. Das Ventil 5 ist in der Lage, den aus dem Verdichter 1 austretenden Hochdruckkältemittelstrom in zwei Strompfade, einen Strompfad 7 für den Kühlkreislauf und einen Strompfad 9 für einen Heizkreislauf, aufzuteilen. Der Strompfad 7 führt in bekannter Weise weiter zu einem Gaskühler 11, in dem das erhitzte Hochdruckgas heruntergekühlt wird.

Über eine Verbindung 13 läuft der Kältekreislauf zu einem internen Wärmetauscher 15, von dort geht der Kreislauf über eine Verbindung 17 weiter zu einem Expansionsventil 19, in dem das Kältemittel expandiert und damit auf eine niedrige Temperatur herunterkühlt. Über eine Verbindung 21 wird nun das kalte Kältemittel in einen Verdampfer 23 geleitet, welcher vom Zuluftstrom in der Leitung 25 für den Fahrgastraum durchströmt wird. Dabei wird der Zuluftstrom entsprechend abgekühlt, während das Kältemittel hier wieder Wärme aufnimmt. Vom Verdampfer 23 wird das Kältemittel über eine Verbindung 27 zu einem Sammler 29 geführt, in dem flüssige und gasförmige Anteile des Kältemittels voneinander getrennt werden. Über eine Verbindung 31 wird noch einmal der interne Wärmetauscher 15 durchströmt, dann gelangt das Kältemittel über die Verbindung 33 zu einem Verbindungspunkt 35 und von dort zur Niederdruckseite 37 des Kompressors 1.

Der zusätzliche parallele Erwärmungskreislauf über die abzweigende Verbindung 9 führt zunächst über einen Wärmetauscher 39, der mit einem Kühlwasserkreislauf 41 verbunden ist, so dass das Kühlwasser die Wärme des Hochdruckgases aufnehmen kann. Der Erwärmungskreislauf führt über eine Verbindung 43 weiter zu einem Expansionsventil 45, mit welchem das Kältemittel auf den niedrigen Ansaugdruck des Kompressors expandiert. Eine Verbindung 47 führt weiter zu einem Rückschlagventil 49, von welchem der Wärmekreislauf über eine Verbindung 51 zu dem Verbindungspunkt 35 und damit zu der Niederdruckansaugseite 37 des Kompressors führt. Das Rückschlagventil 49 sorgt dafür, dass nur Kältemittel aus dem Wärmekreislauf in den Ansaugbereich 37 des Kompressors gelangen kann, dass aber nicht umgekehrt Kältemittel aus dem Niederdruckbereich des Kühlkreislaufs rückwärts in den Wärmekreislauf einströmen kann. Der Kühlwasserkreislauf 41 führt über den Wärmetauscher 39 mittels einer Verbindung 53 weiter zu einem Wärmetauscher 55, der ebenfalls von dem Zuluftstrom für die Fahrgastzelle durchströmt wird, wobei der Zuluftstrom aus dem Kühlwasserkreislauf 41 mittels des Wärmetauschers 55 Wärme aufnimmt. Die Funktion der beiden Klimakreisläufe besteht darin, dass zunächst im Verdampfer 23 die Zuluft abgekühlt wird und dabei eventuelles Kondenswasser aus der Zuluft abgeschieden wird und ausfällt. Danach wird die Zuluft im Wärmetauscher 55 leicht erwärmt und gelangt danach in den Fahrgastraum, um einen Beschlag auf den Scheiben zu vermeiden, wie es ansonsten oft der Fall ist, insbesondere dann, wenn, wie oft vorgeschlagen, die Anlage zum Teil umgekehrt, nämlich als Heizung betrieben wird und der feuchte Verdampfer zum Heizen verwendet wird, so dass das Wasser auf ihm schlagartig verdampft.

Die Funktion dieser Klimaanlage soll hier noch einmal in ihrer Struktur erläutert werden. Um das Beschlagen der Scheiben im Fahrgastraum zu verhindern, muß die Luft etwas getrocknet werden. Dies wird durch folgende drei Schritte erreicht:
- Kühlung der Zuluft des Fahrgastraumes
- Abfuhr des eventuell entstehenden Kondenswassers
- Erwärmung der Zuluft um mindestens einen kleinen Betrag, falls warme Luft vom Fahrer gewünscht wird oder zum Trocknen der Scheiben erforderlich ist.

Die Kühlung der Zuluft erfolgt über einen Kältekreislauf, der vom Kompressor 1 betrieben wird. Falls dabei Kondenswasser entsteht, wird dieses aus dem Luftstrom sobald als möglich abgeführt. Die Erwärmung der Luft erfolgt über einen nachfolgenden Wärmetauscher 55, der wenigstens bei kaltem Motor maßgeblich seine Wärme aus dem Heißgas (Hochdruckseite) des gleichen Kompressors 1 gewinnt. Es kann also über denselben Kompressor 1 gleichzeitig ein Kältekreislauf und ein Wärmekreislauf betrieben werden, wobei über verschiedene Aktoren im Kühlsystem (Ventile, verstellbare Drosseln und so weiter) ein Abstimmung von Kühlung und Heizung erreicht werden kann und somit eine gewünschte Temperatur und Luftfeuchtigkeit im Fahrgastraum eingestellt werden kann. Insbesondere wird ein Ventil 5 auf der Hochdruckseite des Kompressors benötigt, das den Kältemittelstrom zwischen Kühlkreislauf und Heizkreislauf aufteilt.

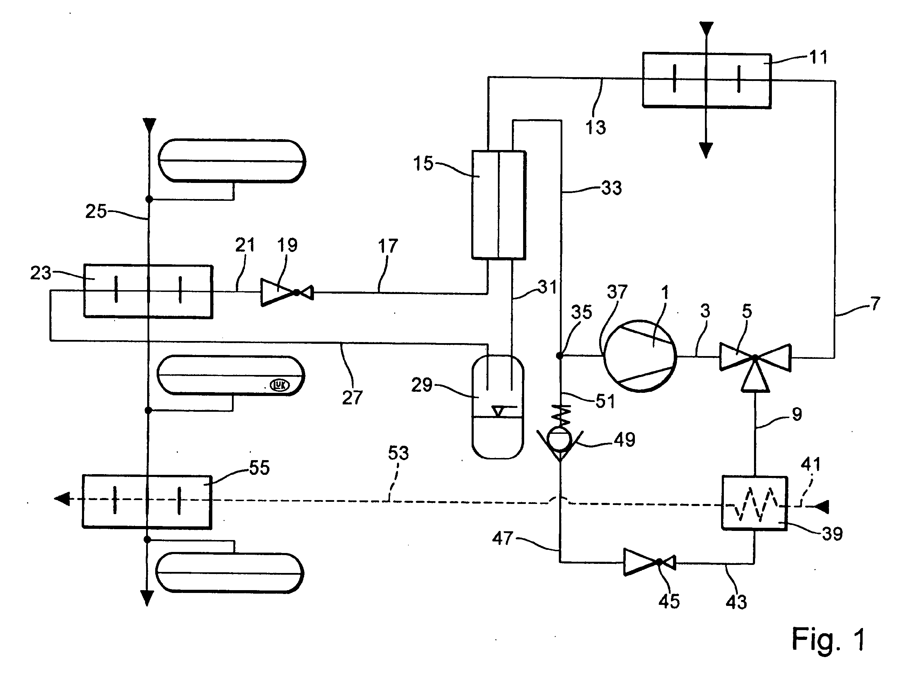

Die Systemlösung in Figur 1 zeigt einen sogenannten Dreiecksprozeß: Erwärmung eines kleinen Kühlwasserkreislaufs 41 mit einem Teil des Hochdruckgases und Abgabe der Wärme des kleinen Kühlkreislaufs an die Zuluft des Fahrgastraums. Falls die Kühlwassertemperatur des Fahrmotors ausreichend hoch ist oder das Motorkühlwasser zusätzliche Erwärmung benötigt, kann der kleine Kühlwasserkreislauf geöffnet werden und von dem Kühlwasser des Motors gespeist werden. Das zur Erwärmung des kleinen Kühlwasserkreislaufs verwendete Hochdruckgas wird anschließend gedrosselt und dem System wieder auf der Saugseite des Kompressors zugeleitet.

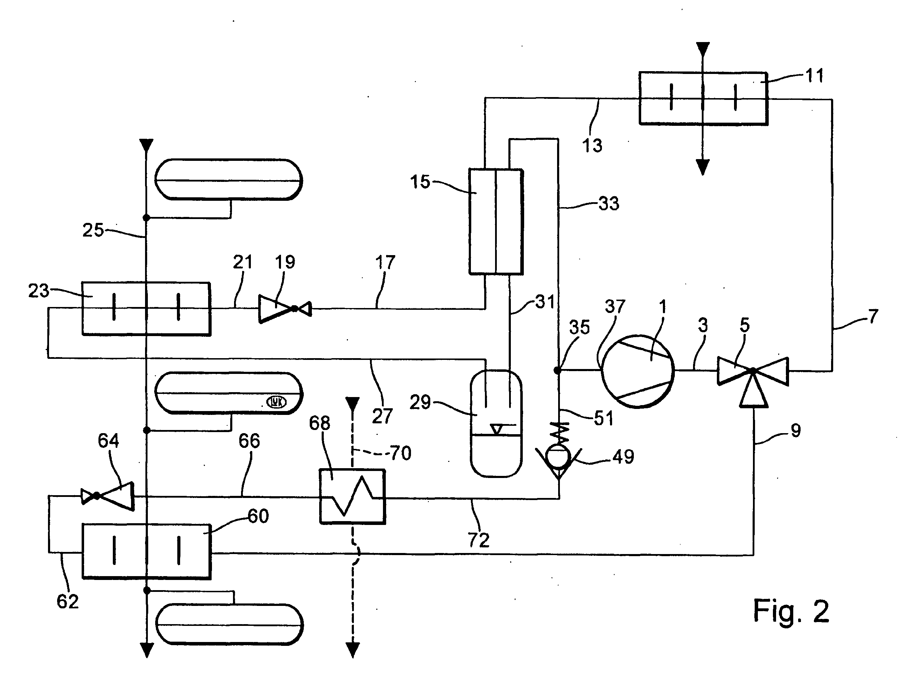

Figur 2 zeigt eine erfindungsgemäße Klimaanlage, bei welcher der Erwärmungskreislauf eine vollständige Wärmepumpe darstellt. Der Kältekreislauf bleibt so, wie in Figur 1 beschrieben, hat daher entsprechend die gleichen Bezugszeichen und soll hier nicht noch einmal erläutert werden. Die Unterschiede liegen im Erwärmungskreislauf, der an dem Stromteilventil 5 mit der Leitung 9 beginnt. Die Leitung 9, in welche ein Teil des heißen Hochdruckgases strömt, wird einem Wärmetauscher 60 zugeführt, welcher die Zuluft in den Fahrgastraum mittels des heißen Hochdruckgas erwärmt. Über eine Verbindung 62 strömt das Hochdruckgas, welches nun entsprechend kühler geworden ist, zu einem Expansionsventil 64 und expandiert dort auf den niedrigeren Druck, welcher auch auf der Ansaugseite 37 des Kompressors 1 herrscht. Über eine Verbindung 66 wird das Kältemittel dieses Heizkreislaufs zu einem Wärmetauscher 68 geleitet, in welchem über eine Leitung 70 Wärme aus dem Motorkühlwasser dem Kältemittel zugeführt wird. Über eine weitere Verbindung 72 wird der Kreislauf dann über das Rückschlagventil 49 und die Verbindung 51 dem Verbindungspunkt 35 mit dem Kältekreislauf zugeführt.

Figur 2 stellt somit den Kreislauf einer vollständigen Wärmepumpe dar. Ein Teil des Hochdruckgases des Kompressors erwärmt die Zuluft des Fahrgastraumes. Danach wird das Hochdruckgas gedrosselt und bekommt anschließend wieder Wärme zugeführt, bevor es auf der Saugseite des Kompressors wieder ins System geleitet wird. Die nach der Drosselung zugeführte Wärme stammt vorzugsweise aus dem Motorkühlwasser, aus der Umgebungsluft oder aus warmen Teilen des Motors oder Motorblocks oder des Abgasstrangs. Dabei wird eine Beeinflussung des Wärmestroms, z. B. über die Regelung des Volumenstroms des Motorkühlwassers, bevorzugt, insbesondere mit einem thermostatischen Regelventil.

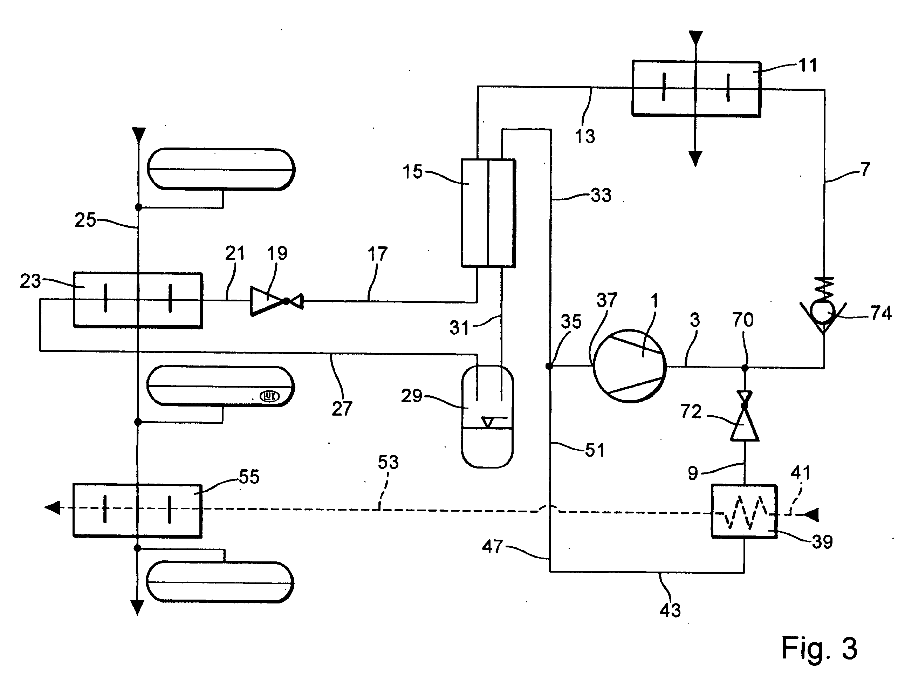

Figur 3 zeigt eine Variante des Klimakreislaufs aus Figur 1. Gleiche Anlagenteile sind mit gleichen Bezugszeichen versehen und werden durch die Beschreibung in Figur 1 hinreichend erläutert. Der wesentliche Unterschied zu Figur 1 besteht darin, dass statt des Ventils 5 aus Figur 1 an dieser Stelle des Kreislaufs nur ein Abzweigpunkt 70 dargestellt ist, an welchem sich der Heizkreislauf und der Kühlkreislauf trennen. Hinter dem Abzweigpunkt 70 ist im Heizkreislauf ein Expansionsventil 72 angeordnet, hinter welchem dann der Heizkreislauf über die Verbindung 9 zum Wärmetauscher 39 weiterführt. In der Weiterleitung des Kühlkreislaufs hinter dem Abzweigpunkt 70 ist ein Rückschlagventil 74 angeordnet, welches dafür sorgt, dass rückwärts aus dem Kältekreislauf kein Kältemittel zurückströmen kann. Das Expansionsventil 45 aus Figur 1 sowie das Rückschlagventil 49 aus Figur 1 entfallen. Der Hauptvorteil dieser Kreislaufgestaltung besteht darin, dass kein Umschaltventil 5 benötigt wird. Der Heizkreislauf wird durch Öffnen oder Schließen des Expansionsventils 72 angesteuert und der Kühlkreislauf wird durch Öffnen und Schließen des Expansionsventils 19 angesteuert. Dadurch entfällt das Ventil 5, welches zum Beispiel große Strömungsquerschnitte im Kreislauf bedienen muss und deswegen durch große Ansteuermagnete entsprechend kostenungünstig und störanfällig sein kann. Der zu regelnde Durchflussquerschnitt eines Expansionsventils ist entschieden kleiner und damit mit entschieden weniger Aufwand zu öffnen, zu schließen bzw. zu regeln. Wird der Kältekreislauf durch Schließen des Expansionsventils 19 geschlossen, so wird durch den sich in diesem Kreislaufabschnitt bildenden Rückdruck das Rückschlagventil 74 schließen und somit sicherstellen, dass kein nachströmendes Kältemittel im Gaskühler 11 kondensiert und somit eine immer größer werdende Kältemittelmenge sich an dieser Stelle im Kreislauf niederschlägt. Über den in diesem Fall stattfindenden Heizbetrieb im Heizkreislauf wird dazu das Expansionsventil 72 geöffnet und über den Wärmetauscher 39 mit dem noch relativ heißen Kompressorgas die gewünschte Heizwirkung erzielt. Das auf den Kompressoransaugdruck expandierte Kältemittel des Heizkreislaufs wird dann über den Verbindungspunkt 35 dem Kompressor wieder zugeführt.

Im Kühlwasser-CO₂-Wärmetauscher kann nach der Wärmephase soviel Wärme eingekoppelt werden, dass es zu extrem hohen Saugdrücken nahe am Auslegungsdruck kommen kann. Um dem entgegenzuwirken, ist es vorteilhaft, diesen Wärmetauscher thermostatisch zu regeln. Ein thermostatisches Regelventil sensiert die Kühlwassertemperatur in diesem Wärmetauscher und reduziert eigenständig den Kühlwasserdurchfluß in der Weise, dass die Temperatur in diesem Wärmeaustauscher einen voreingestellten Maximalwert nicht überschreitet. Dadurch wird der Saugdruck begrenzt.

Für die Regelung der Anlage und die Vermeidung von Grenzzuständen werden bei Erwärmung der Zuluft des Fahrgastraumes folgende Strategien bevorzugt:
1. Dreiecksprozeß:
   a) Beim Einschalten der kalten Anlage wird die Triebraumzufuhr in einem Kompressor mit variablem Hub weitgehend geschlossen, um flüssiges Kältemittel möglichst schnell aus dem Kompressor zu bekommen.
   b) Beim Einschalten der kalten Anlage wird der kleine Kühlwasserkreislauf wenigstens so lange vom kälteren Motorkühlwasserkreislauf abgekoppelt, bis auf der Hochdruckseite des Kompressors kaum noch flüssiges Kältemittel auftritt.
   c) Ist die Temperatur des kleinen Kühlwasserkreislaufs nach Abgabe der Wärme an die Zuluft des Fahrgastraumes geringer als die Temperatur des Motorkühlwassers, so wird der kleine Kühlwasserkreislauf zum Motorkreislauf geöffnet.
   d) Wird weniger Wärme zum Heizen des Fahrgastraumes benötigt, so wird der zum Heizen abgezweigte Hochdruckgasstrom entsprechend reduziert, um Kraftstoff zu sparen.
   e) Soll der Fahrgastraum bei warmem Motorkühlwasser eher gekühlt werden, so wird die Umwälzung des kleinen Kühlwasserkreislaufs abgeschaltet. Damit wird keine zusätzliche Wärme in die Anlage eingetragen und dadurch Kraftstoff gespart.
   f) Soll das Motorkühlwasser beim Start eines kalten Motors aufgeheizt werden und dabei auf eine möglichst schnelle Aufheizung des Fahrgastraumes verzichtet werden, so wird unter Berücksichtigung von a) der kleine Kühlwasserkreislauf zum Motorkühlwasserkreislauf hin geöffnet.
2. Wärmepumpe:
   a) Beim Einschalten der kalten Anlage wird die Triebraumzufuhr in einem Kompressor mit variablem Hub weitgehend geschlossen, um flüssiges Kältemittel möglichst schnell aus dem Kompressor zu kommen.
   b) Soll der Fahrgastraum bei warmem Motorkühlwasser eher gekühlt werden, so wird die Wärmezufuhr nach der Drosselung im Heizzweig möglichst weit reduziert, um Kraftstoff zu sparen.

In Unteransprüchen verwendete Rückbeziehungen weisen auf die weitere Ausbildung des Gegenstandes des Hauptanspruches durch die Merkmale des jeweiligen Unteranspruches hin.

## Patentansprüche

1. Klimaanlage zur Erwärmung und/oder Kühlung eines Fahrgastraumes eines Fahrzeugs mit Verbrennungsmotor, mit einem Kühlwasserkreislauf, mit einem Kompressor (1), der gleichzeitig, d. h. im Parallelbetrieb, wenigstens zwei Klimakreisläufe versorgen kann; wobei ein erster Kreislauf zur Kühlung und gleichzeitig ein zweiter Kreislauf zur Erwärmung der Zuluft eines Fahrgastraumes eingesetzt werden kann **dadurch gekennzeichnet dass** im zweiten Kreislauf mit der hohen Temperatur des Hochdruckgases mittels eines ersten Wärmetauschers (39) ein Kühlwasserkreislauf (41) erwärmt wird, und der Kühlwasserkreislauf (41) einen Bypass zum eigentlichen Kühlwasserkreislauf des Verbrennungsmotors enthält, welcher geöffnet und geschlossen werden kann, um einen kleinen bzw. großen Kühlwasserkreislauf zu bilden.

2. Klimaanlage nach Anspruch 1, **dadurch gekennzeichnet, dass** auf der Hochdruckseite stromab hinter dem Kompressor (1) im Kreislauf ein Abzweigpunkt (70) angeordnet ist, welcher den Hochdruckkältemittelstrom in zwei Ströme aufteilen kann, insbesondere mittels eines Ventils (5).

3. Klimaanlage nach Anspruch 2, **dadurch gekennzeichnet, dass** hinter dem Abzweigpunkt (70) im zweiten Kreislauf ein Expansionsventil (72) angeordnet ist.

4. Klimaanlage nach Anspruch 2 oder Anspruch 3, **dadurch gekennzeichnet, dass** hinter dem Abzweigpunkt (70) im ersten Kreislauf ein Rückschlagventil (74) angeordnet ist.

5. Klimaanlage nach Anspruch 1, **dadurch gekennzeichnet, dass** der Kühlwasserkreislauf (41) mittels eines zweiten Wärmetauschers (55) die Zuluft des Fahrgastraums erwärmt.

6. Klimaanlage nach Anspruch 1, **dadurch gekennzeichnet, dass** stromab hinter dem ersten Wärmetauscher (39) eine Drosseleinrichtung oder ein Expansionsventil (45) angeordnet ist.

7. Klimaanlage nach Anspruch 6, **dadurch gekennzeichnet, dass** stromab hinter der Drosseleinrichtung oder dem Expansionsventil (45) ein Rückschlagventil (49) angeordnet ist, das einen Kältemittelstrom aus dem Kühlkreislauf in den Erwärmungskreislauf verhindert.

8. Klimaanlage nach Anspruch 7, **dadurch gekennzeichnet, dass** stromab hinter dem Rückschlagventil (49) der Erwärmungskreislauf in den Kühlkreislauf auf der Niederdruckseite, d. h. auf der Ansaugseite (37) des Kompressors (1) einmündet.

9. Klimaanlage nach Anspruch 1, **dadurch gekennzeichnet, dass** der Volumenstrom des Motorkühlwassers zur Beeinflussung des Wärmestroms im Kühlwasserkreislauf (41) mit einem thermostatischen Regelventil regelbar ist.

10. Klimaanlage nach einem der vorhergehenden Ansprüche, **dadurch gekennzeichnet, dass** bei Einschalten der Klimaanlage die Triebraumzufuhr in einem Kompressor (1) mit variablem Hub weitgehend geschlossen wird, um flüssiges Kältemittel möglichst schnell aus dem Kompressor zu bekommen.

11. Klimaanlage nach einem der vorhergehenden Ansprüche, **dadurch gekennzeichnet, dass** bei Einschalten der kalten Klimaanlage der kleine Kühlwasserkreislauf (41) wenigstens so lange vom kälteren Motorkühlwasserkreislauf abgekoppelt wird, bis auf der Hochdruckseite des Kompressors kaum noch flüssiges Kältemittel auftritt.

12. Klimaanlage nach einem der vorhergehenden Ansprüche, **dadurch gekennzeichnet, dass** der kleine Kühlwasserkreislauf (41) zum Motorkühlwasserkreislauf geöffnet wird, wenn die Temperatur des kleinen Kühlwasserkreislaufs (41) nach Abgabe der Wärme an die Zuluft des Fahrgastraums geringer ist als die Temperatur des Motorkühlwassers.

13. Klimaanlage nach einem der vorhergehenden Ansprüche, **dadurch gekennzeichnet, dass** der kleine Kühlwasserkreislauf (41) zum Motorkühlwasserkreislauf geöffnet wird, wenn das Motorkühlwasser beim Start des kalten Motors aufgeheizt werden und dabei auf eine möglichst schnelle Heizung des Fahrgastraumes verzichtet werden soll.

14. Klimaanlage nach einen der vorhergehenden Ansprüche, **dadurch gekennzeichnet, dass** als Kältemittel Gase benutzt werden, welche auf der Hochdruckseite während des Kreislaufs im Betrieb hohe Temperaturen, insbesondere 120°C, erreichen.

15. Klimaanlage nach einem der vorhergehenden Ansprüche, **dadurch gekennzeichnet, dass** als Kältemittel CO₂ benutzt wird.

## Claims

1. An air conditioning system for heating and/or cooling a passenger compartment of a vehicle with a combustion engine, having a cooling water circuit with a compressor (1) that is simultaneously able, i.e. in parallel operation, to supply at least two climate circuits, where a first circuit may be employed for cooling and at the same time a second circuit may be used for heating the air input to a passenger compartment, **characterized in that** in the second circuit, with the high temperature of the high-pressure gas, a cooling water circuit (41) is heated by means of a first heat exchanger (39), and the cooling water circuit (41) contains a bypass to the actual cooling water circuit of the combustion engine, which may be opened and closed in order to form a small or large cooling water circuit.

2. An air conditioning system according to Claim 1, **characterized in that** on the high-pressure side there is a branching point (70) located downstream behind the compressor (1), which is able to divide the stream of high pressure coolant into two streams, in particular by means of a valve (5).

3. An air conditioning system according to Claim 2, **characterized in that** an expansion valve (72) is located after the branching point (70) in the second circuit.

4. An air conditioning system according to Claim 2 or Claim 3, **characterized in that** a check valve (74) is located after the branching point (70) in the first circuit.

5. An air conditioning system according to Claim 1, **characterized in that** the cooling water circuit (41) heats the air input to the passenger compartment by means of a second heat exchanger (55).

6. An air conditioning system according to Claim 1, **characterized in that** a throttle device or an expansion valve (45) is positioned downstream behind the first heat exchanger (39).

7. An air conditioning system according to Claim 6, **characterized in that** a check valve (49) is positioned downstream behind the throttle device or the expansion valve (45), which prevents a flow of coolant from the cooling circuit into the heating circuit.

8. An air conditioning system according to Claim 7, **characterized in that** downstream behind the check valve (49) the heating circuit issues into the cooling circuit on the low-pressure side, i.e. on the input side (37) of the compressor (1).

9. An air conditioning system according to Claim 1, **characterized in that** the volume flow of the engine cooling water can be regulated with a thermostatic regulating valve to influence the stream of heat in the cooling water circuit (41).

10. An air conditioning system according to one of the preceding claims, **characterized in that** when the air conditioning system is turned on, the power chamber supply in a compressor (1) with variable stroke is largely closed, in order to obtain liquid coolant from the compressor as quickly as possible.

11. An air conditioning system according to one of the preceding claims, **characterized in that** when the cold air conditioner is turned on, the small cooling water circuit (41) is disconnected from the colder engine cooling water circuit at least until there is hardly any liquid coolant still present on the high-pressure side of the compressor.

12. An air conditioning system according to one of the preceding claims, **characterized in that** the small cooling water circuit (41) is opened to the engine cooling water circuit if the temperature of the small cooling water circuit (41) is lower than the temperature of the engine cooling water after giving off its heat to the air input of the passenger compartment.

13. An air conditioning system according to one of the preceding claims, **characterized in that** the small cooling water circuit (41) is opened to the engine cooling water circuit if the engine cooling water is to be heated when starting the cold engine and it is not necessary to heat the passenger compartment as quickly as possible.

14. An air conditioning system according to one of the preceding claims, **characterized in that** gases which reach high temperatures on the high-pressure side during the circuit in operation, in particular 120°C, are used as coolants.

15. An air conditioning system according to one of the preceding claims, **characterized in that** CO₂ is used as the coolant.

## Revendications

1. Installation de climatisation et/ou de refroidissement d'un habitacle d'un véhicule à moteur à combustion interne, avec un circuit d'eau de refroidissement, avec un compresseur (1) apte à alimenter simultanément, autrement dit en fonctionnement parallèle, au moins deux circuits de climatisation, un premier circuit pouvant être mis en service pour le refroidissement, et simultanément un deuxième circuit pour le chauffage de l'air d'amenée d'un habitacle, **caractérisée en ce qu'**un circuit d'eau de refroidissement (41) est chauffé dans le deuxième circuit par la température élevée du gaz haute pression au moyen d'un premier échangeur thermique (39), et **en ce que** le circuit d'eau de refroidissement (41) comporte un by-pass pour le circuit d'eau de refroidissement du moteur à combustion interne proprement dit, lequel peut être ouvert et fermé pour former un petit ou un grand circuit d'eau de refroidissement.

2. Installation de climatisation selon la revendication 1, **caractérisée en ce qu'**un point de dérivation (70) est disposé dans le circuit sur le côté haute pression en aval du compresseur (1), lequel peut séparer en deux flux le flux de réfrigérant haute pression, notamment au moyen d'une vanne (5).

3. Installation de climatisation selon la revendication 2, **caractérisée en ce qu'**une vanne d'expansion (72) est disposée en aval du point de dérivation (70) dans le deuxième circuit.

4. Installation de climatisation selon la revendication 2 ou la revendication 3, **caractérisée en ce qu'**une vanne anti-retour (74) est disposée en aval du point de dérivation (70) dans le premier circuit.

5. Installation de climatisation selon la revendication 1, **caractérisée en ce que** le circuit d'eau de refroidissement (41) chauffe l'air d'amenée de l'habitacle au moyen d'un deuxième échangeur thermique (55).

6. Installation de climatisation selon la revendication 1, **caractérisée en ce qu'**un dispositif d'étranglement ou une vanne d'expansion (45) sont disposés en aval du premier échangeur thermique (39).

7. Installation de climatisation selon la revendication 6, **caractérisée en ce qu'**une vanne anti-retour (49) est disposée en aval du dispositif d'étranglement ou de la vanne d'expansion (45), laquelle empêche un flux de réfrigérant sortant du circuit de refroidissement de pénétrer dans le circuit de chauffage.

8. Installation de climatisation selon la revendication 7, **caractérisée en ce qu'**en aval de la vanne anti-retour (49), le circuit de chauffage débouche dans le circuit de refroidissement sur le côté basse pression, autrement dit sur le côté d'aspiration (37) du compresseur.

9. Installation de climatisation selon la revendication 1, **caractérisée en ce que** le débit volumique de l'eau de refroidissement du moteur est régulable par une vanne de régulation thermostatique pour modifier le flux de chaleur dans le circuit d'eau de refroidissement (41).

10. Installation de climatisation selon l'une des revendications précédentes, **caractérisée en ce qu'**à la mise en marche de l'installation de climatisation, l'alimentation de la chambre d'entraînement est pratiquement fermée dans un compresseur (1) à cylindrée variable, pour recevoir du réfrigérant liquide le plus rapidement possible du compresseur.

11. Installation de climatisation selon l'une des revendications précédentes, **caractérisée en ce qu'**à la mise en marche de l'installation de climatisation à froid, le petit circuit d'eau de refroidissement (41) est découplé du circuit d'eau de refroidissement du moteur plus froid, au moins jusqu'à ce que pratiquement plus de réfrigérant liquide ne sorte du côté haute pression du compresseur.

12. Installation de climatisation selon l'une des revendications précédentes, **caractérisée en ce que** le petit circuit d'eau de refroidissement (41) est ouvert sur le circuit d'eau de refroidissement du moteur quand la température du petit circuit d'eau de refroidissement (41) devient inférieure à celle de l'eau de refroidissement du moteur après transfert de chaleur à l'air d'amenée de l'habitacle.

13. Installation de climatisation selon l'une des revendications précédentes, **caractérisée en ce que** le petit circuit d'eau de refroidissement (41) est ouvert sur le circuit d'eau de refroidissement du moteur si l'eau de refroidissement du moteur doit être chauffée au démarrage à froid du moteur et qu'il doit alors être renoncé à un chauffage rapide de l'habitacle.

14. Installation de climatisation selon l'une des revendications précédentes, **caractérisée en ce que** des gaz sont utilisés comme réfrigérant, lesquels atteignent des températures élevées, en particulier 120° C, sur le côté haute pression pendant que le circuit est en service.

15. Installation de climatisation selon l'une des revendications précédentes, **caractérisée en ce que** du CO₂ est utilisé comme réfrigérant.
